Europäisches Patentamt

European Patent Office

Office européen des brevets

(11) Publication number: **0 188 303 B1**

# EUROPEAN PATENT SPECIFICATION

(45) Date of publication of patent specification: **16.10.91**

(51) Int. Cl.⁵: **A01J 7/00**, A01K 1/12, G01S 15/88

(21) Application number: **86200063.5**

(22) Date of filing: **15.01.86**

Divisional application 89101861.6 filed on 15/01/86.

(54) Implement for automatically milking an animal.

(30) Priority: **16.01.85 NL 8500088**

(43) Date of publication of application:
**23.07.86 Bulletin 86/30**

(45) Publication of the grant of the patent:
**16.10.91 Bulletin 91/42**

(84) Designated Contracting States:
**AT BE CH DE FR GB IT LI NL SE**

(56) References cited:
**EP-A- 0 091 892
WO-A-82/00526
GB-A- 2 133 151
US-A- 3 763 828
US-A- 4 010 714**

**LANDTECHNIK, vol. 35, no. 5, May 1980, pages 222-224, Hannover, DE; D. ORDOLFF: "Melkzeuge automatisch ansetzen - demnächst Wirklichkeit?"**

**DE TELEGRAAF, 4th December 1984, page T23; E. BOS: "Land- en tuinbouw"**

(73) Proprietor: **C. van der Lely N.V.
Weverskade 10 P.O. Box 26
NL-3155 ZG Maasland(NL)**

(72) Inventor: **van der Lely, Ary
10A Weverskade
Maasland(NL)**
Inventor: **Bom, Cornelis Johannes Gerardus
16 Laan van Nieuw Rozenburg
Rozenburg(NL)**

(74) Representative: **Mulder, Herman et al
Octrooibureau Van der Lely N.V. Weverskade
10 P.O. Box 26
NL-3155 ZG Maasland(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a device for automatically milking animals, such as cows, comprising guide means positioned near the animal, detection means for determining the position of the animal or the position of specific parts, particularly the teats of the udder of the animal and means for attaching a milking cluster to the udder of the animal.

Such a device is described in EP-A-0 091 892 and comprises a milking parlour where the animal is stationed during milking. The milking parlour must be such, that the animal feels comfortable there. The animal can be fed in the milking parlour with concentrated fodder, the fodder being fed depending on the specific animal. To that end the animal is provided with identifying means to establish which animal is present. The guide means may be in the form of a rail system around or on both sides of the animal.

During automatic milking of the animal, which may be done without a farmer or any other supervision being present, it is of importance that the milking cluster is applied in the correct manner. Therefore, detection means are provided for determining the position of the animal or the position of specific parts, particularly the teats of the udder, of the animal and means for attaching the milking cluster, which means, after positioning, move the milking cluster under the animal and on the udder. By means of this implement the animal, after it has assumed a comfortable position in the milking parlour, can be provided with the milking cluster without the position of the animal being affected.

The purpose of the invention is to provide specific control means, by means of which the determination of the position of the animal or the position of specific parts of the animal, particularly the teats of the udder, of the animal, can be improved.

To that end, according to the invention, the detection means comprises an ultrasonic beam device, while furthermore the milking device is provided with a computer in which data about specific animals are stored, while data from the ultrasonic beam device are supplied to said computer, which calculates the position of specific parts of the animal and controls the means for attaching the milking cluster.

In the computer a plurality of data of the animal to be milked may be stored. This data may contain the location of the udder relative to the location of the detection point on the animal measured by means of the ultrasonic beam device and the configuration (relative location and/or position) of the teats, whereby the location of the teats can be indicated relative to a reference point, preferably one of the teats, and the location of the reference point relative to the detection point.

In addition the time elapsed between milking operations of the same animal can be stored as data in the computer. Such an information may be important in connection with the quantity of fodder the animals is fed during milking, but also in connection with the expected quantity of milk and the degree to which the udder is filled. This last item may affect the position and the location of the teats, so that these data can be taken into account in the determination of the actions to be performed for attaching the milking cluster.

Both the position and the place of each individual teat cup of the milking cluster may be adjustable depending on the position of the teats of a specific animal. This position may however alter, depending on a number of factors or depending on the age of the animal. Therefore, during the milking operation, the position of the teat cups is recorded and stored as data in the computer. These data can be used for subsequent milking operations of the same animal in such a way that before the milking cluster is placed on the udder, the position of the teat cups is adjusted in accordance with the previously recorded position during milking of the same animal. Thus, also gradual changes in the position of the teats can be observed, whereafter the adjustment of the milking cluster for the relevant animal can be adapted thereto.

In addition, according to the invention, the ultrasonic beam device is capable of sensing a marking seal provided on the animal. This marking seal may be a member, for example a metal plate, provided on the animal's back. Such a metal plate can be provided both on and under the skin and needs onl to be of very small dimensions to allow its detection by the ultrasonic beam device, it then being possible to accurately define the position of the plate and consequently the position of the animal or specific parts of the animal.

The marking seal provided on the animal may, according to a further characteristic of the invention, at the same time constitute an information carrier for indentifying the animal, so that, simultaneously with the detection of the marking seal for locating purposes, information about the animal can be obtained.

By way of further illustration of the invention an embodiment of the automatic milking device will be described with reference to the accompanying drawing.

Figure 1 is a schematic plan view of the milking device;

Figure 2 is a side view of the milking device shown in Figure 1;

Figure 3 illustrates the milking cluster with support;

Figure 4 is a plan view of a second embodiment of the milking device;

Figure 5 is a side view of the milking device as shown in Figure 4;

Figure 6 is a schematic view of a third embodiment of the milking device;

Figure 7 is a side view of the milking device of Figure 6;

Figure 8 shows schematically a fourth embodiment of the milking device, and

Figure 9 and Figure 10 show some details of the milking device of Figure 8.

In these Figures corresponding components are given the same reference numerals.

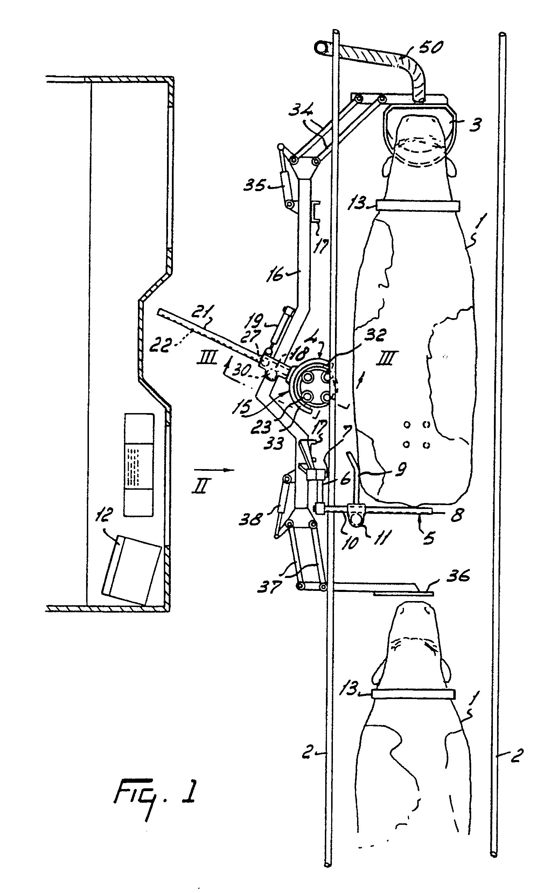

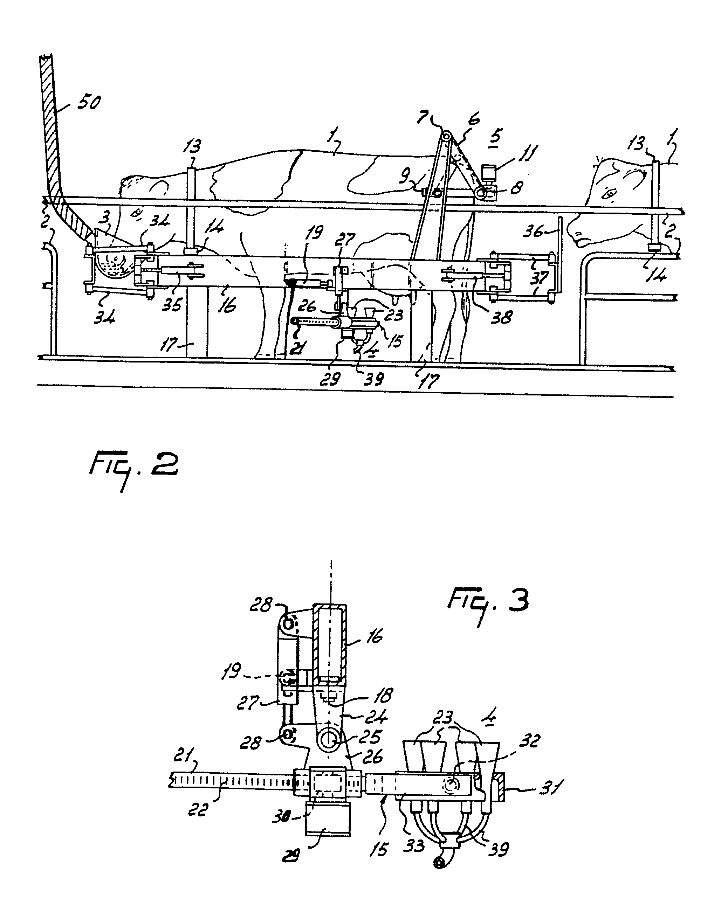

Figure 1 shows in a plan view a cow 1, stationed in the milking parlour. The milking parlour is bounded on both sides by guide rails 2, between which the animal can walk forwards until its head reaches the manger 3; the animal 1 will stop then. To enable correct positioning of the milking cluster 4 the position of the animal must be determined. A mechanism 5 is provided for this purpose, which comprises a swivel arm 6 which is capable of hinging around a substantially horizontal pin 7, and whose other end is provided with a rod 8 fastened to the swivel arm at a substantially square angle. The rod 8 has a movable sensor 9 which can be moved along the rod 8 until it comes to bear on the animal (as is shown in Figure 1). In the embodiments shown in the Figures 1 and 2, the rod 8 is provided with a toothed rack 10, whilst sensor 9 includes an electric motor 11. Thus, the sensor 9 is moved along the rod 8 until the sensor touches the animal 1, means, not further shown, being present for switching off the electric motor 11 when sensor 9 experiences a slight resistance during its travel. It will be obvious that using the sensor 9 the lateral position of the animal 1 can be determined. Prior to this determination, the rod 8 is rotated around a hinge pin 7, so that it bears against the posterior of the animal 1. The angular position then obtained for the swivel arm 6 determines the position of the cow in the forward direction. These data are conveyed to the computer 12, which is shown schematically in Figure 1. If it is furthermore known which cow is in the milking parlour, the computer can determine with an adequate degree of accuracy in what way the milking cluster 4 is to be attached.

To determine which animal is present in the milking parlour the animal carries identification means which, in the embodiments shown in the Figures 1 and 2, are constituted by an information carrier 14 fastened to a collar 13. This information carrier 14 is, for example, a small transmitter, whose signals can be picked up by a sensor connected to the computer and present in the milking parlour.

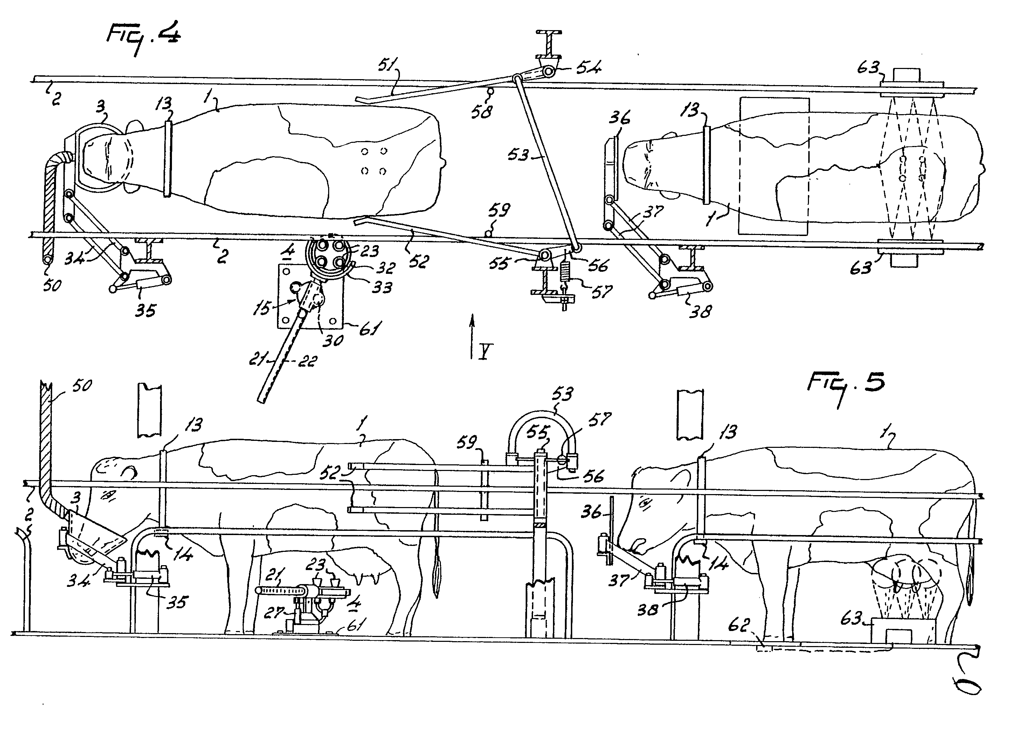

After it has bee determined where the milking cluster 4 is to be connected, the milking cluster 4 can be moved to the relevant position with the aid of the support 15. For that purpose a frame 16 is provided which is fastened to the floor by means of legs 17. The support 15 is fastened capable of hinging, around the substantially vertical pin 18 to the frame 16; rotation around hinge pin 18 is effected by the adjusting device 19, for example a pneumatic or hydraulic cylinder unit. The support 15 includes a rod 21, having a toothed rack 22, with the aid of which the rod 21 can be moved in its longitudinal direction relative to the frame. Using these two displacement modes, swivelling around the vertical pin 18 and longitudinal movement of the rod 21, the milking cluster 4 can be adjusted to any desired position in a horizontal plane. Since the support 15 can also swivel around a substantially horizontal axis relative to the frame, adjustment of the milking cluster 4 in the vertical direction can be achieved. This last mode of adjustment is shown in detail in Figure 3.

Figure 3 shows the milking cluster 4 having four teat cups 23 which together are supported in the support 15. The hollow bar of the frame 16 is shown in a cross-sectional view. A support 24 is provided on this hollow bar 16, which support is capable of swivelling relative to the bar around the hinge pin 18, using an actuating device 19, which is only partly shown. The support 24 is connected to the support 15 by means of a substantially horizontal hinge pin 25, around which portion 26 of the support is swivable. This swivelling action is controlled by actuating device 27, which comprises, for example, a pneumatic or hydraulic cylinder and is connected by means of ball joints 28 to the frame 16 and also to portion 26 of the support. The portion 26 of the support 15 can consequently rotate around both the vertical pin 18 and the horizontal pin 25.

Additionally, Figure 3 shows the electric motor 29, for example a stepper motor, which has on its axle a pinion 30 which cooperates with the toothed rack 22 so as to move rod 21 in its longitudinal direction, causing the milking cluster 31 provided at the end of the rod 21 to be moved to under the animal. As can be seen from Figures 1 and 3, the milking cluster holder 31 is connected, capable of hinging around shaft 32, to the rod 21 through a fork 33, as a result of which the milking cluster holder remains at all times in a horizontal position. Using the described construction, the milking cluster can be adjusted to any desired position by means of an appropriate control of the adjusting devices 19 and 27, and the electric motor 29.

Figure 3 also shows the manner in which the teat cups 23 may be arranged in the milking cluster holder 31. The wider portion of the flaring teat cup 23 is supported in a recess of the milking cluster holder 31, so that the teat cups can freely move up, thus getting free from the milking cluster holder 31. Releasing the cups from the milking cluster holder can be effected after the milking cluster has been attached to the udder and the vacuum has been generated, causing the teat cups to remain attached to the teats, by moving the milking cluster holder downwards. As the tubes 39 connecting the teat cups 23 to the milking machine are adequately flexible, the teat cups 23, after having been lifted from the milking cluster holder 31, have a certain degree of freedom to follow the motions of the animal. After milking has been terminated the vacuum is terminated, which causes the teat cups 23 to fall automatically back into said recesses in the milking cluster holder.

With the object of luring the animal 1 to the milking parlour and/or during milking, a computer-controlled quantity of fodder, for example concentrate, can be conveyed through pipe 50 to the manger 3. By means of a rod system 34 and an adjusting device 35, the manger 3 can be moved to a position outside the milking parlour. Thus, the animal can leave the milking parlour in the forward direction after milking has been terminated.

As is shown in Figures 1 and 2, the next animal is already present between the guide rails 2, but at some distance from the milking parlour. This animal can move up to the milking parlour, lured there by the manger 3, after the mechanism 5 has been moved upwards around a hinge pin 7, and the partition 36 which is connected through the rod system 37 to the frame 16 has been moved to a position outside the guide rails by means of actuating device 38.

The Figures 4 and 5 show a second embodiment of the device for milking an animal. This device also includes guide rails 2 at both sides of the milking parlour, the guide rails extending beyond a washing station which the animal has to pass before it arrives in the milking parlour. As is also the case in the first embodiment, in this embodiment there is a manger 3 which, by means of a rod system 34 and an adjusting mechanism 35 can be moved to outside the area bounded by the guide rails 2. According to this embodiment the animal is moved in the appropriate position by means of two positioning means 51, 52, which bear on either side against the animal 1, if the animal is halfway between the guide rails 2. The positioning members 51, 52 are interconnected such by means of a connecting rod 53 that they can move symmetrically relative to the milking parlour. To that end positioning member 51 is hingeable around a vertical pin 54, whilst positioning member 52 is hingeable around a vertical pin 55. Positioning member 52 is rigidly connected to lever 56, to whose end the connecting rod 53 is connected capable of hinging, the connecting rod 53 being connected at its other end, capable of hinging, to positioning member 51. With the aid of tension spring 57, an inwardly directed force is exerted on the positioning members 51 and 52 and, in the absence of an animal in the milking parlour, the positioning members 51, 52 bear against the stops 58 and 59, respectively. It will be clear that the animal present between the positioning members 51 and 52, experiences, as long as it is in the centre of the milking parlour, a light force from both sides, but that, when the animal is not in the centre, one of the positioning members 51, 52 will exert a greater force on the animal so as to force it back to the central position. Outside the milking parlour there is provided a support 15 for the milking cluster 4, comprising a plate 61 attached to the floor on which plate means are provided for moving the milking cluster to any desired location in the same manner as described with reference to the first embodiment.

Also in the second embodiment the animal carries a collar 13 with an information carrier 14 provided thereon, so that the sensor means, which are not shown, can inform the computer which animal is in the milking parlour. Depending on this information, the desired quantity of fodder can then be fed to the manger 3 and it can be determined to which position the milking cluster 4 is to be moved for correct attachment to the udder of the animal.

In the second embodiment the implement includes a washing station where the udders of the animal can be cleaned, rinsed, disinfected and/or dried, depending on the requirements, before the animal goes to the milking parlour. This washing operation can already be effected during milking of the preceding animal. To that end means are provided, for example a sensor 62, which detect the presence of said animal in the washing station. The animal is then in front of the partition 36 which is movable by means of rod system 37 from a position outside the guide rails 2 to a position between these guide rails. This partition 36 may also be provided with a manger so as to lure the animal in the appropriate position in the washing station. The washing station comprises a plurality of nozzles 63 which can spray the desired liquid, for example warm water, against the udder. Furthermore, drying can be performed by means of warm air blown against the udder.

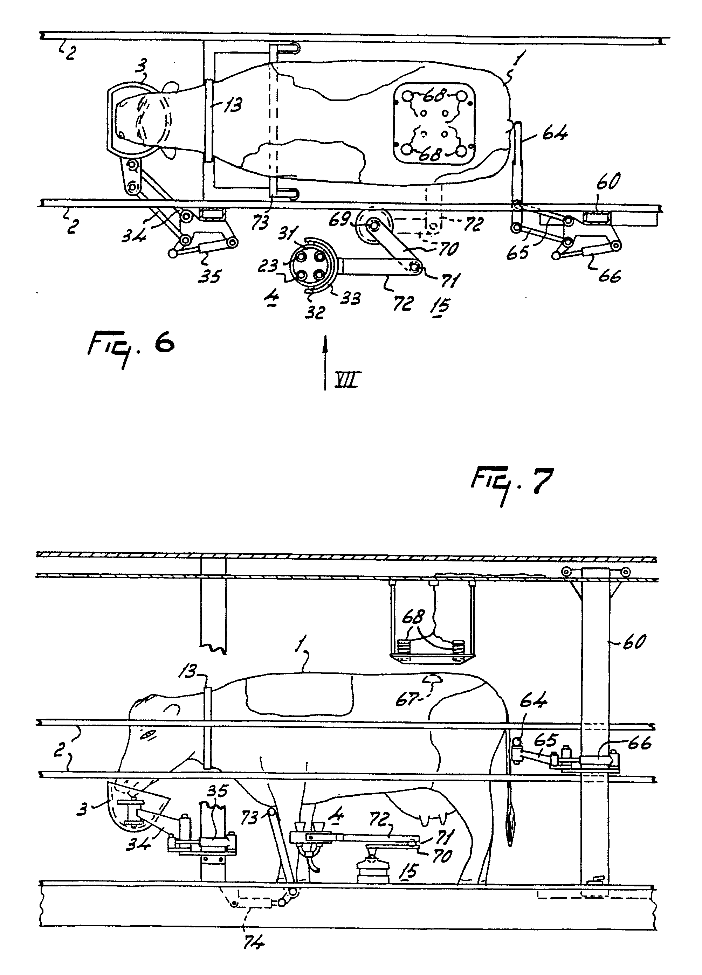

In the embodiment of Figures 6 and 7, the milking parlour is also bounded by guide rails 2 between which the animal 1 is present. In this position the animal can take the fodder in the aforedescribed manner from the manger 3, which manger 3 can be moved to outside the guide rail-bounded area by means of rod system 34 and actuating mechanism 35. At the rear the milking parlour is bounded by a member 64 which can be moved by means of the rod system 65 and the actuating device 66 to outside the area bounded by the guide rails 2. In the embodiment shown, the mechanism 64, 65, 66 is mounted on a beam 60 which is movable in the longitudinal direction relative to the milking parlour, so that the position of the bounding member 64 can be set in dependence on the length of the animal. It will be obvious that the animal present in the milking parlour has a limited freedom of movement. So as to enable determination of the position of the udder, the animal is provided with marking means 67, for example a metal plate, which is connected to the animal's back. Detection means 68 are arranged over the animal, with which the position of the marking means can be determined electronically, which position is conveyed to the computer. In combination with the data of the animal the computer can calculate the position of the udder, whereafter the support of the milking cluster 4 can be actuated so that the milking cluster can be connected to the udder in the correct way.

In the embodiments shown in the Figures 6 and 7, the support comprises an arm 70 which is capable of rotation around a fixed, vertical pin 69. Arm 70 is connected to a second arm 72, but capable of swivelling around vertical pin 71. Arm 72 carries the milking cluster holder 31 at its end. The support can be adjusted for height by means of an electric motor in the region of hinge pin 69 and further positioning is effected by rotation around the pins 69 and 71.

The Figures 6 and 7 also show a stop 73 against which the animal can bear through the upper part of its forelegs. The stop 73 can be hinged downwards, into the floor, by means of actuating device 74, whilst, depending on the relevant animal, the stop 73 can be adjusted to a predetermined position, to render it possible for the animal to eat in a comfortable position whilst yet still bearing against the stop 73.

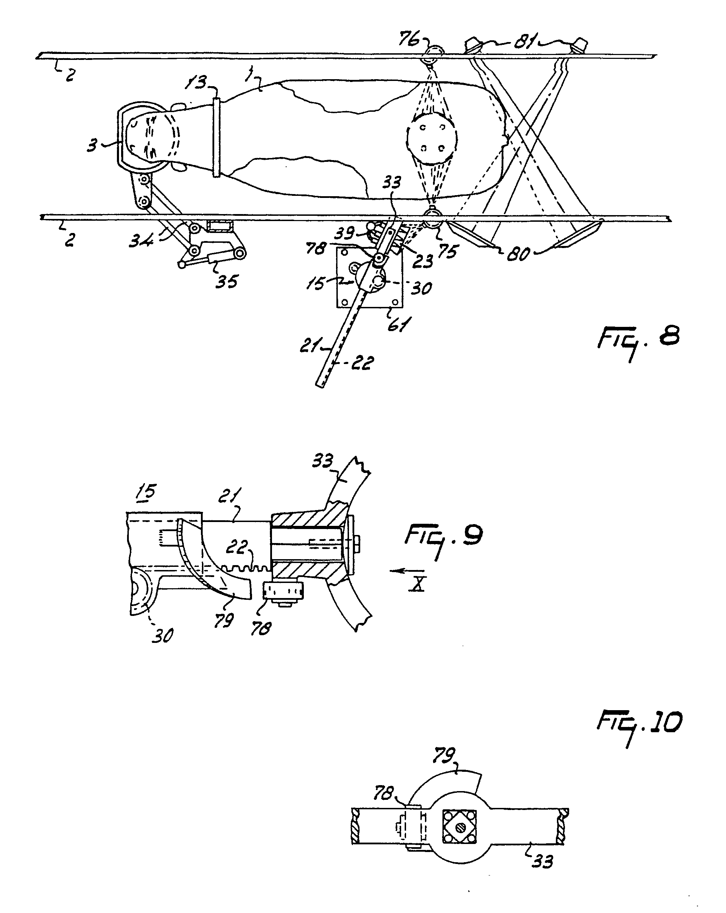

Figure 8 shows an embodiment of the device for milking an animal in which cleaning of the udder is done in the milking parlour. To that end, spraying apparatus 75, 76 are provided which can spray a detergent on the animal's udder, as is shown schematically. The milking cluster can be cleaned at the same time by having the spraying apparatus 75 squirt detergent also in the teat cups 23 of the milking cluster. For that purpose the milking cluster can be tilted to its inverted position or - as is shown in Figure 8 - to a partly tilted position, so that the detergent squirted into the teat cups 23 can flow out again.

Details of the implement for tilting the milking cluster are shown in Figures 9 and 10. As has already been described in the foregoing, rod 21 comprises a toothed rack 22 cooperating with a pinion gear 30, so that the rod 21 can be moved in its longitudinal direction. A fork 33 provided at the rod end shown in Figure 9, carrying the milking cluster holder in the manner described in the foregoing, is hingeable around the longitudinal axis of rod 21. In the operative position the milking cluster is kept in a horizontal position by its own weight. If, however, the rod 21 moves to its extreme position, the guide wheel 78 provided on the fork 33 will cooperate with guide track 79, so that fork 33 will tilt. Figure 10 is a view along the arrow X in Figure 9.

In addition, Figure 8 shows detection means including cells 80 which detect screening of the beams originating from radiation source 81, by the animal. It will be obvious that thus the position of at least the posterior of the animal can be accurately determined.

## Claims

1. Device for automatically milking animals, such as cows, comprising guide means positioned near the animal, detection means for determining the position of specific parts, particularly the teats of the udder, of the animal and means for positioning and attaching a milking cluster to the udder of the animal, characterized in that the detection means comprises an ultrasonic beam device (68) and a computer (12) in which data about specific animals are stored, while data from the ultrasonic beam device (68) are supplied to said computer (12), which calculates the position of specific parts of the animal and controls the means for attaching the milking cluster.

2. Device as claimed in claim 1, characterized in that the data stored in the computer (12) contains the location of the udder relative to the location of the detection point on the animal measured by means of the ultrasonic beam device (68).

3. Device as claimed in claim 2, characterized in that the data stored in the computer (12) contains the configuration (relative location and/or position) of the teats, whereby the location of the teats can be indicated relative to a reference point, preferably one of the teats, and the location of the reference point relative to the detection point.

4. Device as claimed in claim 1, 2 or 3, characterized in that the data stored in the computer (12) contains the time elapsed between successive milking operations of the same animal.

**5.** Device as claimed in any one of the preceding claims, characterized in that the ultrasonic beam device (68) is capable of observing a marking seal (67) provided on the animal.

**6.** Device as claimed in claim 5, characterized in that the marking seal (67) is a member provided on the back of the animal, for example a metal plate.

**7.** Device as claimed in claim 6, characterized in that the member (67) is also an information carrier for animal identifying means.

**8.** Device as claimed in claim 6 or 7, characterized in that the member (67) can be placed subcutaneously.

**Revendications**

**1.** Dispositif pour traire automatiquement des animaux tels que des vaches, comprenant des moyens de guidage positionnés près de l'animal, un moyen de détection pour déterminer la position de parties spécifiques, en particulier les trayons du pis de l'animal, et des moyens pour positionner et pour attacher au pis de l'animal un groupe de ventouses trayeuses,

**caractérisé** en ce que le moyen de détection comprend un dispositif (68) à faisceau d'ultrasons et un ordinateur (12) dans lequel sont mémorisées les données concernant des animaux spécifiques, tandis que des données venant du dispositif (68) à faisceau d'ultrasons sont fournies audit ordinateur (12), lequel calcule la position de parties spécifiques de l'animal et commande les moyens pour attacher le groupe de ventouses trayeuses.

**2.** Dispositif selon la revendication 1, caractérisé en ce que les données mémorisées dans l'ordinateur (12) contiennent la localisation du pis par rapport à la localisation du point de détection sur l'animal, mesurée au moyen du dispositif (68) à faisceau ultrasonique.

**3.** Dispositif selon la revendication 2, caractérisé en ce que les données conservées dans l'ordinateur (12) contiennent la configuration (localisation relative et/ou position relative) des trayons, grâce à quoi peut être indiquée la localisation des trayons par rapport à un point de référence, de préférence un des trayons, ainsi que la localisation du point de référence par rapport au point de détection.

**4.** Dispositif selon la revendication 1, 2 ou 3, caractérisé en ce que les données conservées dans l'ordinateur (12) contiennent le temps écoulé entre des opérations de traite successives du même animal.

**5.** Dispositif selon l'une quelconque des revendications précédentes, caractérisé en ce que le dispositif (68) à faisceau ultrasonique est capable d'observer un cachet marqueur (67) prévu sur l'animal.

**6.** Dispositif selon la revendication 5, caractérisé en ce que le cachet marqueur (67) est un élément prévu sur le dos de l'animal, par exemple une plaque de métal.

**7.** Dispositif selon la revendication 6, caractérisé en ce que l'élément marqueur (67) est aussi un support d'information pour des moyens d'identification de l'animal.

**8.** Dispositif selon la revendication 6 ou 7, caractérisé en ce que l'élément marqueur (67) peut être placé sous la peau de l'animal.

**Patentansprüche**

**1.** Vorrichtung zum automatischen Melken von Tieren, wie zum Beispiel Kühen, mit einer in der Nähe des Tieres angeordneten Leitvorrichtung mit einer Erkennungseinrichtung zur Bestimmung der Lage bestimmter Teile, insbesondere der Zitzen des Euters des Tieres, und mit einer Einrichtung zum Positionieren und Anbringen eines Melkgeschirrs am Euter des Tieres,
dadurch gekennzeichnet, daß die Erkennungseinrichtung eine Ultraschallstrahl-Vorrichtung (68) und einen Computer (12) enthält, in dem Daten spezifischer Tiere gespeichert sind, während Daten von der Ultraschallstrahl-Vorrichtung (68) dem genannten Computer (12) zugeführt werden, der die Position bestimmter Teile des Tieres errechnet und die Einrichtung zum Anbringen des Melkgeschirrs steuert.

**2.** Vorrichtung nach Anspruch 1, dadurch gekennzeichnet, daß die im Computer (12) gespeicherten Daten die Lage des Euters relativ zur Lage des am Tier befindlichen Erkennungspunktes enthalten, der mittels der Ultraschallstrahl-Vorrichtung (68) gemessen wurde.

**3.** Vorrichtung nach Anspruch 2, dadurch gekennzeichnet, daß die im Computer (12) gespeicherten Daten die Konfiguration (relative Lagezuordnung und/oder Position) der Zitzen enthalten, wobei die Lage der Zitzen relativ zu einem Referenzpunkt, vorzugsweise einer der Zitzen, und die Lage des Referenzpunktes relativ zu dem Erkennungspunkt anzuzeigen ist.

4. Vorrichtung nach Anspruch 1, 2 oder 3, dadurch gekennzeichnet, daß die im Computer (12) gespeicherten Daten die Zeitdauer zwischen aufeinanderfolgenden Melkvorgängen desselben Tieres enthalten.

5. Vorrichtung nach einem der vorhergehenden Ansprüche, dadurch gekennzeichnet, daß die Ultraschallstrahl-Vorrichtung (68) zum Erfassen einer Markierung (67) geeignet ist, die an dem Tier vorgesehen ist.

6. Vorrichtung nach Anspruch 5, dadurch gekennzeichnet, daß die Markierung (67) ein am Rücken des Tieres vorgesehenes Teil ist, beispielsweise eine Metallplatte.

7. Vorrichtung nach Anspruch 6, dadurch gekennzeichnet, daß das Teil (67) außerdem ein Informationsträger zur Tieridentifizierung ist.

8. Vorrichtung nach Anspruch 6 oder 7, dadurch gekennzeichnet, daß das Teil (67) subkutan anbringbar ist.

FIG. 1

FIG. 2

FIG. 3

FIG.4

FIG.5

EP 0 188 303 B1

Fig. 6

VII

Fig. 7

FIG. 8

FIG. 9

FIG. 10